# EUROPÄISCHE PATENTSCHRIFT

(11) **EP 1 544 453 B1**
(45) Veröffentlichungstag und Bekanntmachung des Hinweises auf die Patenterteilung: **26.07.2017**
(21) Anmeldenummer: 04106347.0
(22) Anmeldetag: 07.12.2004
(51) Int. Cl.: F02M 37/22

(54) **Belüftetes Wasseraustragsventil**
Ventilated water drain valve
Vanne ventilée pour vidange d'eau

(30) Priorität: 17.12.2003 DE 10359262
(43) Veröffentlichungstag der Anmeldung: 22.06.2005
(73) Patentinhaber: MANN+HUMMEL GmbH, 71636 Ludwigsburg (DE)
(72) Erfinder: Piticco, Claudio, 74395 Mundelsheim (DE); Maul, Horst, 71679 Asperg (DE)

(56) Entgegenhaltungen:
- WO-A-98/19770
- US-B1- 6 237 628

## Beschreibung

### Stand der Technik

Die Erfindung betrifft eine Ventilanordnung zum Ablassen von Wasser aus dem Gehäuse eines Kraftstofffilters. Da ein Auftreten von Wasseranteilen im Kraftstoff von Verbrennungsmotoren unvermeidlich ist, sammeln sich die Wasseranteile aufgrund ihres spezifisch schwereren Gewichtes gegenüber dem von Kraftstoff üblicherweise am tiefsten Punkt eines Behälters. Um zu vermeiden, dass diese abgeschiedene Wassermenge einen Pegel übersteigt und im Kraftstoffsystem weitergeführt wird, muss diese Wassermenge intervallweise im Wartungsfall abgelassen werden können.
Als Behälter im Kraftstoffsystem, welcher das Abscheiden des Wassers ermöglicht, wird üblicherweise der Kraftstofffilter verwendet. Der Einfachheit halber wird im unteren Bereich des Kraftstofffilters eine Schraube angeordnet, welche eine Öffnung verschließt. Durch Öffnen dieser Schraube wird im Wartungsfall das Wasser abgelassen. Problematisch bei dieser Ausführung ist, dass das Wasser nur abfließen kann, wenn gleichzeitig Luft in das System wieder eintritt. Dies wird dadurch erschwert, dass es sich bei der Kraftstoffanlage in der Regel um ein geschlossenes System handelt, was zur Folge hat, dass bei der Anordnung von nur einer Ablassschraube gleichzeitig Wasser aus der Ablauföffnung abfließen und Luft in die Ablauföffnung einströmen muss. Dies hat zur Folge, dass das Wasser oft nur ungleichmäßig ausläuft oder dass die Ablauföffnung durch eine mögliche Verschmutzung verengt wird und somit kein Wasser mehr ausfließen kann. Um das Ablaufen des Wassers zu optimieren, muss eine Luftzutrittsmöglichkeit geschaffen werden. Dies wird im praktischen Einsatz dadurch erreicht, dass eine am oberen Filtergehäuse angeordnete Anschluss- oder Entlüftungsschraube geöffnet wird. Nachteilig an dieser Vorgehensweise ist, dass zwei Verschlussschrauben benötigt werden und auch beide gleichzeitig geöffnet werden müssen. Weiterhin ist aufgrund der praktischen Einbausituation die Unterseite des Filtergehäuses oft schwer zugänglich.

Das Dokument WO 98/19770 A offenbart eine Ventilanordnung zum Ablassen von Wasser aus dem Gehäuse eines Kraftstofffilters. Die Ventilanordnung besteht aus einer zylindrischen Bohrung, an welcher an einem seitlichen Tiefpunkt eine Ablauföffnung angeordnet ist. In der zylindrischen Bohrung an einem geodätisch über der Ablauföffnung liegenden Punkt ist ein Verbindungsloch zum Filtergehäuseinneren angeordnet. Ein axial beweglicher Zylinderstift ist in der Bohrung angeordnet, derart dass der Zylinderstift die Ablauföffnung mit einem in der Stirnseite angebrachten Dichtelement durch einen axialen Druck verschließt und gleichzeitig die Bohrung im Bereich oberhalb des Verbindungsloches durch eine am Zylinderstift angeordnete Radialdichtung abschließt. In gelöstem Zustand ist der Zylinderstift axial verschoben, derart dass das Dichtelement die Ablauföffnung öffnet und dabei gleichzeitig die Radialdichtung die zylindrische Bohrung zur Umgebungsseite hin öffnet.

Die Aufgabe der vorliegenden Erfindung besteht darin, eine Ventilanordnung in einem Kraftstofffilter zu schaffen, welche das gleichmäßige Ablaufen des Wassers durch einfache Betätigung an einer leicht zugänglichen Stelle ermöglicht. Diese Aufgabe wird durch die Merkmale der Patentansprüche 1 und 8 gelöst.

### Vorteile der Erfindung

Die erfindungsgemäße Ventilanordnung zum Ablassen von Wasser aus dem Gehäuse eines Kraftstofffilters eignet sich insbesondere zur Anwendung im Kraftstoffleitungssystem eines Verbrennungsmotors. In einem geschlossenen Filtergehäuse ist seitlich im Tiefbereich eine Ablauföffnung angebracht, welche zum Ablassen des Wassers vorgesehen ist. Weiterhin ist seitlich am Gehäuse eine zylindrische Bohrung angebracht, welche in die Ablauföffnung des Gehäuses mündet. An einem geodätisch höheren Bereich der zylindrischen Bohrung befindet sich ein Verbindungsloch, welches ins Gehäuseinnere führt. Die zylindrische Bohrung endet an der Umgebungsseite des geschlossenen Gehäuses. In der zylindrischen Bohrung ist bei geschlossenem Ventilzustand ein Zylinderstift angebracht, welcher die Ablauföffnung durch ein an der Stirnseite angebrachtes Dichtelement verschließt. Oberhalb des Verbindungsloches zwischen Gehäuse und zylindrischer Bohrung ist am Zylinderstift oder an der zylindrischen Bohrung eine Radialdichtung angeordnet, welche die zylindrische Bohrung zur Umgebungsseite hin abdichtet. Das Gehäuse mit den beschriebenen korrespondierenden Bauteilen kann einstückig oder auch aus mehreren Teilen zusammengesetzt sein. Vorzugsweise ist es in einem Urformverfahren aus einem Leichtmetall, z. B. Aluminium, oder aus Kunststoff, beispielsweise Polyamid. hergestellt. Bei dieser Anordnung werden durch einen Zylinderstift sowohl die Ablauföffnung als auch ein Verbindungsquerschnitt zum Nachströmen von Luft geschlossen. Da die Ablauföffnung in einem unteren Punkt angeordnet ist und der Zylinderstift aufgrund des höher angeordneten Verbindungsloches zur Luftzuführung oberhalb der Ablauföffnung angeordnet ist, ist die zugängliche Seite des Zylinderstiftes an der Oberseite und somit von oben zu betätigen. Dies gewährleistet in den üblichen Einbaupositionen eine günstige Zugänglichkeit. Der Zylinderstift ist in der zylindrischen Bohrung axial verschiebbar, wodurch die Ventilanordnung in einen geöffneten Zustand versetzt werden kann. Der Abstand zwischen dem stirnseitigen Dichtelement des Zylinderstiftes und der oberhalb des Verbindungsloches angeordneten Radialdichtung, ist derart abgestimmt, dass die Ablauföffnung in geöffnetem Zustand durch das stirnseitige Dichtelement geöffnet ist, und die Radialdichtung gleichzeitig einen Einströmquerschnitt zwischen zylindrischer Bohrung und Verbindungsloch freigibt. Die Öffnung dieses Verbindungsquerschnittes kann dadurch erreicht werden, dass zwischen zylindrischer Bohrung und Zylinderstift ein Ringspalt vorhanden ist und die Radialdichtung bei axialer Bewegung über eine Kante zu einem größeren Durchmesser geführt und dadurch die Dichtwirkung der Radialdichtung aufgehoben wird. Es ist jedoch auch möglich, die zylindrische Bohrung ohne einen Absatz auszuführen und als Dichtkontur den oberen Abschluss der Bohrung vorzusehen. Der Zylinderstift kann wahlweise aus Kunststoff oder Metall hergestellt sein. Vorteilhaft an dieser Ausführung ist, dass durch eine axiale Bewegung die Ablauföffnung geöffnet wird und gleichzeitig ein Strömungskanal zur Nachströmung von Luft über die zylindrische Bohrung und das Verbindungsloch gewährleistet ist.

In einer weiteren Ausgestaltung ist die zylindrische Bohrung seitlich schräg in der Gehäusewandung angeordnet, wobei die Bohrung auch bei dieser Ausführungsform seitlich in die Ablauföffnung mündet. Besonders empfehlenswert ist diese Ausführung, wenn das Gehäuse im Urformverfahren, insbesondere im Spritzgussverfahren hergestellt wird. In diesem Fall kann die für die Wandung der Bohrung erforderliche Geometrie in der Gussform berücksichtigt werden kann. Vorteilhaft bei dieser Ausführungsform ist, dass die Ablauföffnung nicht zwangsläufig außerhalb der Gehäuseinnenseite angeordnet werden muss, sondern bündig mit der Gehäusewandung abschließen kann oder sogar leicht versetzt vom Gehäuserand aus nach innen gesetzt sein kann. Durch diese Anordnung, die einer möglichst zentralen Anordnung der Ablauföffnung nahe kommt, wird ein optimaleres Abfließen des abgesetzten Wassers erlaubt, und es werden gleichzeitig evtl. vorhandene Schmutzpartikel mit ausgespült. Weiterhin ergibt sich der Vorteil, dass die zylindrische Bohrung näher im Gehäuseinneren verläuft und sich dadurch ein Vorteil bzgl. des Einbauraumes ergibt. Verbessert wird auch die Zugänglichkeit der zylindrischen Bohrung, an welcher sich durch die schräge Anordnung der Bohrungsmündung mehr Raum für mögliche Montagearbeiten ergibt.

Eine weitere vorteilhafte Ausführung des Erfindungsgedankens ergibt sich insbesondere bei der zuvor beschriebenen, schräg angeordneten zylindrischen Bohrung durch die Gestaltung der inneren Geometrie des Gehäuses. Hier kann das Verbindungsloch zwischen Gehäuseinnenseite und der zylindrischen Bohrung durch eine von der Innenseite nach außen ragende Kante gebildet werden. Wird die zylindrische Bohrung derart abgestimmt, dass die Bohrung die nach außen ragende Kante tangiert, so kann nach Herstellung des Rohlings durch das Anfertigen der zylindrischen Bohrung gleichzeitig das Verbindungsloch zur Gehäuseinnenseite hergestellt werden. Somit wird Vorteilhafterweise die zylindrische Bohrung und das Verbindungsloch in einem Arbeitsgang hergestellt. Da das Verbindungsloch durch eine nach außen ragende Kante hergestellt ist, welche nach oben geöffnet ist, ist es möglich, diese Ausführung hinterschnittsfrei zu konstruieren. Die erfindungsgemäße Ausführungsform des Zylinderstiftes ermöglicht sich durch die Anbringung einer Längsbohrung im Zylinderstift, wobei die Längsbohrung zur Umgebungsseite hin geöffnet ist und mit einer Querbohrung oberhalb der Radialdichtung kommuniziert. Durch diese Bohrung kann ein Strömungskanal zur Belüftung zwischen der Umgebungsseite und dem Verbindungsloch hergestellt werden. Somit ist eine vorteilhafte, definierte Nachströmung der Umgebungsluft durch den Zylinderstift gewährleistet.

Eine weitere erfindungsgemäße Ausführungsform des Zylinderstiftes ergibt sich durch das Anbringen einer Längsnut am Außengewinde, welche im Bereich oberhalb der Radialdichtung des Zylinderstiftes angeordnet ist. Durch diese angebrachte Längsnut kann im geöffneten Zustand der Ventilanordnung ein sicherer Verbindungsquerschnitt der Umgebungsseite zum Verbindungsloch gewährleistet werden, wodurch die Luft ungehindert durch die zylindrische Bohrung und das Verbindungsloch in das Gehäuseinnere einströmen kann. Vorteilhaft an dieser Ausführungsform ist, dass ein definierter Nachströmquerschnitt durch eine einfach herzustellende Längsnut erzielt wird.
Eine weitere vorteilhafte Gestaltung der Erfindung ergibt sich durch die Ausführung des Zylinderstiftes und dessen Verbindung mit der zylindrischen Bohrung. Wird dieser Zylinderstift mit einem Außengewinde versehen, welches mit einem Innengewinde der zylindrischen Bohrung kommuniziert, so kann die axiale Bewegung und die notwendige axiale Befestigungskraft durch Ein- und Ausdrehen des Zylinderstiftes bewirkt werden. Diese Gewindeverbindung des Zylinderstiftes mit dem Gehäuse kann naheliegenderweise am oberen Ende der zylindrischen Bohrung bzw. des Zylinderstiftes angebracht sein. Der Zylinderstift kann hierbei in eingeschraubtem Zustand in der zylindrischen Bohrung versenkt sein, wobei in diesem Fall ein Innensechskant oder eine Schlitzkontur zum Drehen des Zylinderstiftes notwendig ist. In der Ausführungsform des Innensechskantes mit zentrischer Belüftungsbohrung ermöglicht sich die Dosierung des Luftstromes auch durch ein Sechskantwerkzeug. Bei versenktem Zylinderstift empfiehlt es sich, die zylindrische Bohrung durch eine abnehmbare Staubschutzkappe zu verschließen.
Vorteilhaft bei dieser Gewindeverbindung des Zylinderstiftes mit der zylindrischen Bohrung ist die räumliche Integration der Bewegungskontur im Gehäuse, wodurch im Außenbereich keine Bewegungselemente für die Bewegung des Zylinderstiftes notwendig sind. Weiterhin wird die Anzahl der notwendigen Bauteile auf den einzig vorhandenen Zylinderstift reduziert, wobei die Gewindeverbindung wirtschaftlich herstellbar ist. Die axiale Bewegung des Zylinderstiftes zu Wartungsarbeiten bzw. zum Ablassen des Wassers kann problemlos mit werkstattüblichem Werkzeug durchgeführt werden.

Eine weitere vorteilhafte Gestaltung der Erfindung ergibt sich durch die Anordnung eines Ablaufstutzens, der mit der Ablauföffnung kommuniziert und welcher Verbindungselemente zu einem weiterführenden Leitungssystem ermöglicht. Durch den Ablau fstutzen kann das abfließende Wasser, welches üblicherweise mit Kraftstoffanteilen vermischt ist, gezielt weitergeführt und in einem Sammelbehälter aufbewahrt oder in eine Ölwanne abgeleitet werden.

Das erfindungsgemäße Verfahren zum Ablassen von Wasser aus einem Gehäuse eines Kraftstofffilters ermöglicht es, durch die Verschiebung von einem Zylinderstift gleichzeitig eine tiefer liegende Ablauföffnung im Gehäuse zu öffnen und einen Verbindungsquerschnitt zur Nachströmung von Umgebungsluft herzustellen. Der Zylinderstift wird hier durch Drehbewegung über eine Gewindeverbindung oder durch einen Hebelmechanismus von einer geschlossenen Position in eine geöffnete Position bewegt. Hierbei wird die Ablauföffnung durch das axiale Lösen eines stirnseitig am Zylinderstift angebrachten Dichtelementes geöffnet und gleichzeitig die zwischen Zylinderstift und einer Bohrung angebrachte Radialdichtung gelöst. Durch das Ablaufen von Flüssigkeit aus dem geschlossenen Gehäuse entsteht im Gehäuse ein relativer Unterdruck, wodurch die Umgebungsluft durch die zylindrische Bohrung vorbei am Zylinderstift durch das Verbindungsloch in das Gehäuse einströmen kann. Somit entsteht beim Ablaufen der Flüssigkeit aus dem geschlossenen Gehäuse kein Strömungswiderstand für die Flüssigkeit, wodurch die Flüssigkeit gleichmäßig abströmen kann. Beim axialen Bewegen des Zylinderstiftes in den geschlossenen Zustand wird ein Druck auf das stirnseitig am Zylinderstift angebrachte Dichtelement ausgeübt, wodurch die Ablauföffnung verschlossen wird. Gleichzeitig wird die zylindrische Bohrung durch eine am Zylinderstift angebrachte Radialdichtung wieder verschlossen und der Filter in seinen Betriebszustand versetzt. Durch dieses Verfahren wird es ermöglicht, den Kraftstofffilter schnell und zuverlässig und ohne besondere Vorrichtungen zu entwässern und anschließend wieder dicht zu verschließen.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Ein Ausführungsbeispiel wird nachfolgend anhand der Zeichnungen erläutert. Hierbei zeigen
- Figur 1: einen unteren seitlichen Abschnitt eines Kraftstofffilters, an welchem die Ventilanordnung zum Ablassen von Wasser in geschlossener Stellung dargestellt ist,
- Figur 2: zeigt die Ventilanordnung gemäß Figur 1 in geschlossenem Zustand.

### Beschreibung der Ausführungsbeispiele

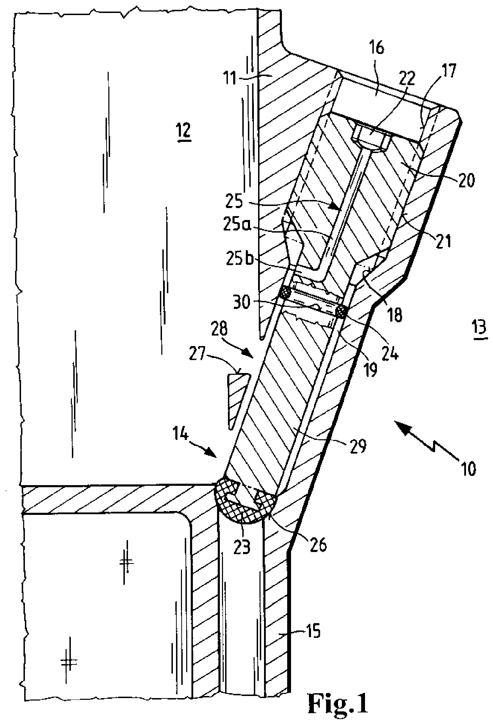

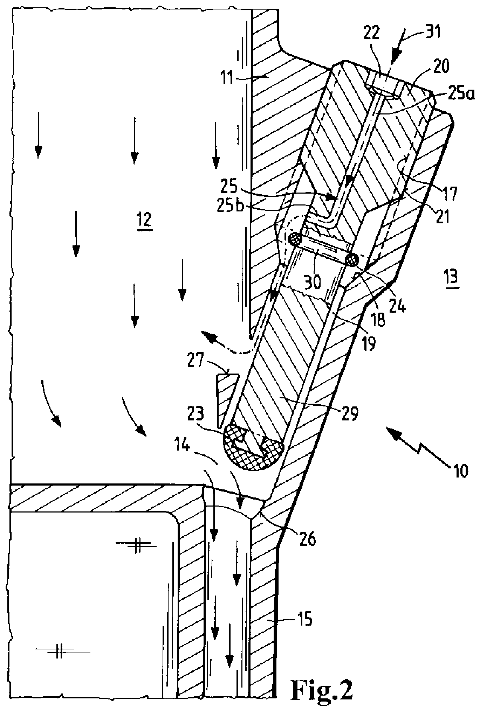

In Figur 1 ist eine Ventilanordnung 10 zum Abscheiden von Wasser aus einem Gehäuse 11 dargestellt, wobei das nur teilweise dargestellte Gehäuse 11 ein geschlossenes System darstellt und eine Innenseite 12 von einer Umgebungsseite 13 trennt. An der Innenseite 12 des Gehäuses 11 ist seitlich unten eine Ablauföffnung 14 vorgesehen, welche in geöffnetem Zustand (Figur 2) eine Verbindung zum Ablaufstutzen 15 herstellt. Seitlich am Gehäuse 11 ist eine Bohrung 16 schräg angeordnet, wobei die Bohrung an ihrem untersten Punkt in die Ablauföffnung 14 mündet. An einem geodätisch höheren Bereich der Innenseite 12 ist eine nach außen ragende Kante 27 angeordnet, wobei von der Umgebungsseite der Kante 27 ein Verbindungsloch 28 zur Bohrung 16 hergestellt ist. Die Bohrung 16 weist in einem oberen Bereich ein Innengewinde 17 auf und wird in einem weiter unten liegenden Bereich über einen Konus 18 auf einen geringeren Durchmesser reduziert, wobei im reduzierten Durchmesser eine radiale Dichtfläche 19 entsteht. Im untenliegenden Bereich mündet die Bohrung 16 in einer Dichtkontur 26, welche ebenso mit der Ablauföffnung 14 kommuniziert. Der in der Bohrung 16 angeordnete Zylinderstift 20 weist im oberen Bereich ein Außengewinde 21 auf, welches mit dem Innengewinde 17 der Bohrung 16 verschraubt ist. Unterhalb des Außengewindes 21 des Zylinderstiftes 20 verjüngt sich der Zylinderstift 20 und bildet im unteren Bereich einen Schaft 29, wobei dieser einen geringeren Durchmesser als die radiale Dichtfläche 19 aufweist. Im oben liegenden Bereich des Schaftes 29 ist eine Radialnut 30 angeordnet, welche zur Aufnahme eines Radialdichtringes 24 dient. In dem gezeigten Ausführungsbeispiel stellt der Radialdichtring 24 eine dichte Verbindung zwischen Gehäuseinnenseite 12 und Umgebungsseite 13 her. An der unteren Stirnseite des Schaftes 29 ist ein Dichtelement 23 angebracht, welches aufgrund von axialem Druck durch den Zylinderstift 20 eine dichtende Verbindung mit der Dichtkontur 26 herstellt und somit die Ablauföffnung 14 gegenüber dem Ablaufstutzen 15 verschließt. Die gezeigte Dichtkontur 26 ist in diesem Ausführungsbeispiel als eine Axialdichtung vorgesehen. Diese Dichtverbindung kann z.B. auch über einen weiteren O-Ring gebildet werden. Im oberen Bereich des Zylinderstiftes 20 ist eine Belüftungsbohrung 25 angebracht, welche durch eine axiale Bohrung 25a und eine radiale Bohrung 25b einen Strömungskanal zwischen Umgebungsseite 13 und einem Bereich des Zylinderstiftes, welcher zwischen Radialdichtung 24 und Außengewinde 21 liegt, herstellt. An der oberen Stirnseite des Zylinderstiftes 20 ist ein Innensechskantprofil 22 eingeprägt, welches zum Ein- und Ausdrehen des Zylinderstiftes 20 vorgesehen ist. Durch das Eindrehen der Gewindeverbindung zwischen Innengewinde 17 und Außengewinde 21 wird der Zylinderstift 20 axial bewegt und verschließt in eingedrehtem Zustand durch das Dichtelement 23 die Ablauföffnung 14 und durch die Radialdichtung 24 die Verbindung zur zylindrischen Bohrung.

In Figur 2 ist die Ventilanordnung 10 in geöffnetem Zustand dargestellt. Der Figur 1 entsprechende Bauteile sind mit den gleichen Bezugszeichen versehen. Der Zylinderstift 20 ist über die Gewindeverbindung axial nach oben bewegt, wodurch die Ablauföffnung 14 zum Ablaufstutzen 15 hin geöffnet ist. Durch die Axiale Bewegung des Zylindersiftes 20 ist auch der Radialdichtring 24 außerhalb der radialen Dichtfläche 19, wodurch sich ein Strömungskanal 31 ergibt, welcher durch den Innensechskant 22, die Belüftungsbohrung 25 und einen Spalt zwischen radialer Dichtfläche 19 sowie dem Schaft 29 des Zylinderstiftes 20 hergestellt ist. Der Strömungskanal 31 wird bei dieser Gestaltung durch die Belüftungsbohrung 25 gewährleistet. Es ist jedoch auch möglich, diesen Strömungskanal durch das Anordnen zum Beispiel einer Längsnut innerhalb des Außengewindes 21 oder des Innengewindes 17 herzustellen.

## Patentansprüche

1. Ventilanordnung zum Ablassen von Wasser aus dem Gehäuse eines Kraftstofffilters, bestehend aus dem Filtergehäuse, (11) an welchem an einem seitlichen Tiefpunkt eine Ablauföffnung (14) angeordnet ist, wobei in die Ablauföffnung (14) gleichzeitig eine zylindrische Bohrung (16) mündet, welche in der Filtergehäusewandung angeordnet ist und eine Verbindung zur Umgebungsseite (13) herstellt, wobei in der zylindrischen Bohrung (16) an einem geodätisch über der Ablauföffnung (14) liegenden Punkt ein Verbindungsloch (28) zum Filtergehäuseinneren (12) angeordnet ist, wobei in der Bohrung (16) ein axial beweglicher Zylinderstift (20) angeordnet ist, derart dass der Zylinderstift (20) die Ablauföffnung (14) mit einem an der Stirnseite angebrachten Dichtelement (23) durch einen axialen Druck verschließt und gleichzeitig die Bohrung (16) im Bereich oberhalb des Verbindungsloches (28) durch eine am Zylinderstift (20) angeordnete Radialdichtung (24) abschließt, wobei der Zylinderstift (20) in gelöstem Zustand axial verschoben ist, derart dass das Dichtelement (23) die Ablauföffnung (14) öffnet und dabei gleichzeitig die Radialdichtung (24) die zylindrische Bohrung (16) zur Umgebungsseite (13) hin öffnet, wobei wenigstens eine im Zylinderstift (20) angeordnete Bohrung (25) oder eine am Zylinderstift (20) angeordnete Längsnut einen Strömungskanal zur Umgebungsseite gewährleistet.

2. Ventilanordnung nach Anspruch 1, **dadurch gekennzeichnet, dass** die zylindrische Bohrung (16) schräg im Filtergehäuse (11) angeordnet ist.

3. Ventilanordnung nach Anspruch 2, **dadurch gekennzeichnet, dass** das Verbindungsloch (28) durch eine im Filtergehäuse (11) angebrachte, nach außen ragende Kante (27) gebildet ist.

4. Ventilanordnung nach einem der vorhergehenden Ansprüche, **dadurch gekennzeichnet, dass** die Bewegung und die Befestigung des Zylinderstiftes (20) in der Bohrung (16) durch eine Gewindeverbindung (17, 21) hergestellt ist.

5. Ventilanordnung nach einem der vorhergehenden Ansprüche, **dadurch gekennzeichnet, dass** die Ablauföffnung (14) in einen Ablaufstutzen (15) geführt wird und dieser mit einem Rohrleitungssystem verbunden ist.

6. Kraftstofffilter, umfassend eine Ventilanordnung nach einem der Ansprüche 1-5.

7. Verfahren zum Ablassen von Wasser aus dem Gehäuse eines Kraftstofffilters, wobei ein Zylinderstift in einer im Filtergehäuse angeordneten zylindrischen Bohrung angeordnet ist, welcher mit einem Dichtelement eine Ablauföffnung im Tiefpunkt des Filtergehäuses und mit einer Radialdichtung die zylindrische Bohrung verschließt, wobei durch axiales Verschieben des Zylinderstiftes die Ablauföffnung und gleichzeitig ein Strömungskanal der zylindrischen Bohrung geöffnet wird, wobei oberhalb der Ablauföffnung ein Verbindungsloch angeordnet ist, welches mit der zylindrischen Bohrung kommuniziert, wobei das Dichtelement die Ablauföffnung öffnet und dabei gleichzeitig die Radialdichtung die zylindrische Bohrung zur Umgebungsseite hin öffnet, wobei wenigstens eine im Zylinderstift angeordnete Bohrung oder eine am Zylinderstift angeordnete Längsnut einen Strömungskanal zur Umgebungsseite gewährleistet, wodurch das Ablaufen von Wasser durch die Ablauföffnung und gleichzeitig das Zuströmen von Luft durch die zylindrische Bohrung und das Verbindungsloch ermöglicht wird.

## Claims

1. Valve arrangement for draining water from the housing of a fuel filter, consisting of the filter housing (11) at which a drain opening (14) is disposed at a lateral low point, wherein a cylindrical borehole (16), which is disposed in the filter housing wall and realizes a connection to the ambient side (13), ends at the same time in the drain opening (14), wherein a connecting hole (28) to the filter housing interior (12) is disposed in the cylindrical borehole (16) at a point lying geodetically above the drain opening (14), wherein an axially movable cylindrical pin (20) is disposed in the borehole (16) in such a way that the cylindrical pin (20) closes the drain opening (14) with a sealing element (23) disposed on the front side by means of an axial pressure and at the same time closes the borehole (16) in the area above the connecting hole (28) by means of a radial seal (24) disposed at the cylindrical pin (20), wherein the cylindrical pin (20) is axially displaced in a loosened state in such a way that the sealing element (23) opens the drain opening (14) and at the same time the radial seal (24) opens the cylindrical borehole (16) towards the ambient side (13), wherein at least one borehole (25) disposed in the cylindrical pin (20) or one longitudinal groove disposed at the cylindrical pin (20) ensures a flow channel towards the ambient side.

2. Valve arrangement according to claim 1, **characterized in that** the cylindrical borehole (16) is disposed obliquely in the filter housing (11).

3. Valve arrangement according to claim 2, **characterized in that** the connecting hole (28) is formed by means of an outwardly projecting edge (27) mounted in the filter housing (11).

4. Valve arrangement according to one of the above claims, **characterized in that** the movement and the attachment of the cylindrical pin (20) in the borehole (16) are realized by means of a threaded joint (17, 21).

5. Valve arrangement according to one of the above claims, **characterized in that** the drain opening (14) is led into a drain connection (15) and that this connection is connected to a pipe system.

6. Fuel filter, comprising a valve arrangement according to one of the claims 1-5.

7. Method for draining water from the housing of a fuel filter, wherein a cylindrical pin, which closes a drain opening in the low point of the filter housing with a sealing element and the cylindrical borehole with a radial seal, is disposed in a cylindrical borehole disposed in the filter housing, wherein by axial displacement of the cylindrical pin the drain opening and at the same time a flow channel of the cylindrical borehole are opened, wherein a connecting hole, which communicates with the cylindrical borehole, is disposed above the drain opening, wherein the sealing element opens the drain opening and at the same time the radial seal opens the cylindrical borehole towards the ambient side, wherein at least one borehole disposed in the cylindrical pin or a longitudinal groove disposed at the cylindrical pin ensures a flow channel towards the ambient side so that the outflow of water through the drain opening and at the same time the inflow of air through the cylindrical borehole and the connecting hole are made possible.

## Revendications

1. Ensemble de soupapes destiné à évacuer de l'eau du boîtier d'un filtre à carburant, comprenant le boîtier de filtre (11) au point latéral le plus bas duquel est disposée une ouverture d'évacuation (14), un trou de forage cylindrique (16) débouchant simultanément dans l'ouverture d'évacuation (14), lequel est positionné dans la paroi du boîtier de filtre et établit une liaison avec le côté environnement (13), un trou de jonction (28) menant à l'intérieur du boîtier de filtre (12) étant placé dans le trou de forage cylindrique (16) à un point géodésiquement situé au-dessus de l'ouverture d'évacuation (14), une goupille cylindrique (20) mobile en sens axial étant positionnée dans le trou de forage (16) de sorte que la goupille cylindrique (20) obture, sous l'effet d'une pression axiale, l'ouverture d'évacuation (14) avec un élément d'étanchéité (23) monté sur la face frontale et ferme simultanément le trou de forage (16), dans la zone située au-dessus du trou de jonction (28), par un joint radial (24) placé sur la goupille cylindrique (20), la goupille cylindrique (20) étant décalée en sens axial à l'état desserré, de sorte que l'élément d'étanchéité (23) ouvre l'ouverture d'évacuation (14) et que, simultanément, le joint radial (24) ouvre le trou de forage cylindrique (16) vers le côté environnement (13), au moins un trou de forage (25) prévu dans la goupille cylindrique (20) ou une rainure longitudinale prévue sur la goupille cylindrique (20) générant un canal d'écoulement vers le côté environnement.

2. Ensemble de soupapes selon la revendication 1, **caractérisé en ce que** le trou de forage cylindrique (16) est disposé de manière oblique dans le boîtier de filtre (11).

3. Ensemble de soupapes selon la revendication 2, **caractérisé en ce que** le trou de jonction (28) est formé par un bord (27) en saillie vers l'extérieur placé dans le boîtier de filtre (11).

4. Ensemble de soupapes selon l'une des revendications précédentes, **caractérisé en ce que** le mouvement et la fixation de la goupille cylindrique (20) dans le trou de forage (16) sont assurés par un assemblage fileté (17, 21).

5. Ensemble de soupapes selon l'une des revendications précédentes, **caractérisé en ce que** l'ouverture d'évacuation (14) mène à une tubulure d'évacuation (15) et que cette tubulure est reliée à un système de tuyauteries.

6. Filtre à carburant, comprenant un ensemble de soupapes selon l'une des revendications 1 à 5.

7. Procédé destiné à évacuer de l'eau du boîtier d'un filtre à carburant, une goupille cylindrique étant positionnée dans un trou de forage cylindrique disposé dans le boîtier de filtre, cette goupille obturant avec un élément d'étanchéité une ouverture d'évacuation située au point le plus bas du boîtier de filtre et obturant avec un joint radial le trou de forage cylindrique, le décalage en sens axial de la goupille cylindrique permettant d'ouvrir l'ouverture d'évacuation et simultanément un canal d'écoulement du trou de forage cylindrique, un trou de jonction étant placé au-dessus de l'ouverture d'évacuation et communiquant avec le trou de forage cylindrique, l'élément d'étanchéité ouvrant l'ouverture d'évacuation et le joint radial ouvrant simultanément le trou de forage cylindrique vers le côté environnement, au moins un trou de forage prévu dans la goupille cylindrique ou une rainure longitudinale prévue sur la goupille cylindrique générant un canal d'écoulement vers le côté environnement, ce qui permet un écoulement de l'eau à travers l'ouverture d'évacuation et simultanément l'arrivée d'air à travers le trou de forage cylindrique et le trou de jonction.
